# EUROPEAN PATENT SPECIFICATION

(11) **EP 3 818 821 B1**
(45) Date of publication and mention of the grant of the patent: **15.04.2026**
(21) Application number: 20205835.0
(22) Date of filing: 05.11.2020
(51) Int. Cl.: A01G 9/18, C05F 17/00, C05F 17/80, C05F 17/10

(54) **METHOD FOR THE USEFUL RECYCLING OF A CO2-CONTAINING GAS STREAM**
VERFAHREN ZUM NÜTZLICHEN RECYCLING EINES CO2-HALTIGEN GASSTROMS
PROCÉDÉ POUR LE RECYCLAGE UTILE D'UN FLUX DE GAZ CONTENANT DU CO2

(30) Priority: 05.11.2019 NL 2024165
(43) Date of publication of application: 12.05.2021
(73) Proprietor: BioVerbeek B.V., 5941 MX Velden (NL)
(72) Inventor: VERBEEK, Alphons Johannes Marie, 5941 MX Velden (NL); VERBEEK, Leonard Henricus Marie, 5941 MX Velden (NL)
(74) Representative: Algemeen Octrooi- en Merkenbureau B.V.

(56) References cited:
- EP-A1- 3 095 771
- WO-A1-03/006400
- WO-A1-2009/086307
- WO-A1-2012/080348
- AT-B- 390 053
- US-A1- 2019 143 268

## Description

The present invention relates to a method for the useful recycling of a CO₂-containing gas stream.

CO₂ is not only released during combustion, but also in the production of hydrogen, bioethanol and biogas. In a number of cases, the resulting CO₂ is released into the atmosphere. The Netherlands has an organisation by the name of OCAP which captures industrial CO₂ and subsequently takes this to horticulturalists. In this way, OCAP makes a substantial contribution to the reduction of the climate problem.

Since 2005, OCAP has been supplying pure CO₂ via a supply line and an extensive distribution network to many hundreds of horticulturalists. The horticulturalists then no longer have to run their boilers or combined heat and power installations in the summer and as a result save approximately 115 million m³ natural gas per year. The annual CO₂ emission by horticulturalists is consequently reduced by more than 200,000 tons. This represents a unique benefit for both the environment and the greenhouse farming sector, and enables the greenhouse farming sector to switch to renewable energy.

Horticulturalists require CO₂ for their greenhouses. Plants require heat, water, light, nutrients and CO₂ to be able to grow. Plants grow better in a greenhouse because the horticulturalist provides optimum conditions. If necessary, the horticulturalist also provides additional light, water, heat, nutrients and thus also additional CO₂ in the greenhouse. In such greenhouses, vegetable, flowers, fruit, algae and/or plants are grown. The horticulturalist may be supplied with this CO₂ via the pipeline from OCAP which in turn obtains the CO₂ as a waste stream from industrial processes. If there is insufficient CO₂, the growth of the crop is adversely affected. This would then lead to a reduction in yield and would require the horticulturalist to run his gas-fired central heating boiler in the middle of summer. The reason for this is that the combustion of natural gas also releases CO₂ which is in turn supplied to the greenhouse. Because plants grow fastest during the summer months, due to the large amounts of light and because it is warm, the demand for CO₂ is also greatest during this period, after which photosynthesis follows.

Due to a variety of problems, the supply of CO₂ from industrial processes may be irregular. For example, in August 2017, a fire occurred at the Shell Pernis refinery resulting in a shut-down of production. As a result of this emergency situation, an important source of CO₂ was unavailable which was very unfortunate, in particular during the summer period. One possibility of achieving a more stable and steady supply of CO₂ is to connect the CO₂ pipeline to new sources, meaning other waste-to-energy plants.

When using CO₂ originating from industrial processes, there is another drawback in addition to the fluctuating supply of CO₂. The price which has to be paid for CO₂ is high and these prices are not constant either. When the demand for CO₂ is high and the supply is low, the price of CO₂ will rise and the horticulturalist is not always in a position to be able to pass this higher price on to the consumers of his products. Horticulturalists often work with predetermined supply prices and an increase in the price of CO₂ then has to be paid by the horticulturalist.

Yet another drawback of the use of CO₂ originating from industrial processes is the fact that these processes pollute the environment. Such processes often use fossil fuels, resulting in the emission of other constituents. In this context, consideration may be given to NOx, but also to soot particles and heavy metals. In this way, fossil fuels contribute considerably to environmental pollution.

International application WO 2012/080348 discloses a method for supplying carbon dioxide and/or heat in a greenhouse consisting of the following steps: a) fermenting vegetable, fruit and garden waste to produce biogas, b) mixing compost and/or vegetable, fruit and garden waste with the at least partly fermented waste, so that a mixture having a dry weight percentage of at least 35 is produced, c) composting the resultant mixture in order to produce heat and compost, d) separating CO₂ from the biogas from step a) and, optionally, supplying CO₂ to a greenhouse, e) supplying heat produced in step c) preferably to a greenhouse, preferably in the form of water from 30°C to 60°C.

Internationale application WO 2009/086307 relates to a method for treating biomass, comprising: a) supplying biomass to one or more microbial fermenters; b) transferring output from one or more microbial fermenting units to at least one algae production unit; c) harvesting the algae from the algae production unit, wherein gasses produced in at least a) are transferred to one or more of a gas separation unit, another fermenter unit, to a combustion unit or to an algae production unit.

American publication US 2019/0143268 relates to a system for scrubbing and treating fermentation smell and combustion waste gas, consisting of a scrubbing tower, a biological deodorizing filter tower, a multifunctional biomass combustion boiler, a liquid fermentation reactor, a solid fermentation reactor, circulation pumps, an extraction fan and an induced draught fan.

Internationale application WO 03/006400 relates to a biomass heating system comprising a vessel with a first chamber for an amount of biomass material which undergoes aerobic decomposition in order to thus generate heat energy in the biomass material, an adjacent structure which comprises a second chamber with a fluid to be heated, provided with (c) a heat pipe to transfer heat energy which is generated by the decomposition of the biomass material in the first chamber to the fluid in the second chamber.

European patent publication EP 3 095 771 relates to a device for treating a biological residual material with air, wherein the biological residual material is situated on a surface, which device comprises means for supplying air to the aforementioned biological residual material, wherein the aforementioned means for supplying air comprises a number of plastic pipes which are positioned equidistant from one another under the surface, wherein the aforementioned plastic pipes are positioned under the aforementioned surface in such a way that the aforementioned outlet openings supply air to the aforementioned biological residual material, wherein the plastic pipes are surrounded by a concrete composition.

AT 390 053 relates to a device for carrying out a method for compensating for the CO₂ deficit in and for heating greenhouses, wherein an air extraction system and a composting zone, preferably located within the greenhouse, for the aerobic, oxidative composting of rapidly compostable organic material are provided above a growing zone in a greenhouse, wherein a connecting line between the air extraction system and the composting zone, through which the extracted air is supplied to the composting zone, and a connection between the composting zone and an air return system are arranged, through which the air extracted from the composting zone is returned to the plants.

It is an object of the present invention to provide a CO₂-containing gas stream which solves or reduces one or more of the above-described problems.

Another object of the present invention is to provide a sustainable and environmentally friendly process in which a CO₂-containing gas stream is recycled in a useful manner.

The present invention thus relates to a method for the useful recycling of a CO₂-containing gas stream, wherein a CO₂-containing gas stream originating from a biological process is supplied to a space in which vegetables, flowers, fruit, algae and/or plants are grown.

Applying such a measure fulfils one or more objectives. The present invention thus partly or completely omits the use of CO₂ originating from industrial processes and is therefore aimed at supplying a CO₂-containing gas stream to a space in which vegetables, flowers, fruit, algae and/or plants are grown, which CO₂-containing gas stream originates from a biological process.

In a specific embodiment of the present invention, the biological process from which the CO₂-containing gas stream originates is a composting process. An example of such a composting process is known from European patent EP 3 095 771. This publication discloses a device for treating a biological residual material with air, wherein the biological residual material is situated on a surface, which device comprises a number of plastic pipes which are positioned equidistant from one another under the surface in order to supply air to the aforementioned biological residual material. The plastic pipes which are surrounded by a concrete composition comprise outlet openings which are positioned at an angle and equidistant from one another along the length of the plastic pipe.

In an embodiment of the present invention, the CO₂-containing gas stream is supplied to a heat exchanger, in which the energy extracted from the CO₂-containing gas stream is supplied to a space in which vegetables, flowers, fruit, algae and/or plants are grown. In many cases, the CO₂-containing gas stream which originates from a biological process has a high temperature and the space in which vegetables, flowers, fruit, algae and/or plants are grown requires heat. By now extracting energy from the CO₂-containing gas stream and using the extracted energy to heat the space in which vegetables, flowers, fruit, algae and/or plants are grown, a favourable energy system is obtained. It is also possible to use the energy extracted from the CO₂-containing gas stream for other objects requiring heat, for example building, such as domestic dwellings. After all, the energy which is required to heat the space in which vegetables, flowers, fruit, algae and/or plants are grown is not only obtained via the conventional combustion of (fossil) fuels, but now also via a biological process.

In an embodiment of the present invention, the CO₂-containing gas stream is subjected to a step of removing nitrogen constituents before it is supplied to a space in which vegetables, flowers, fruit, algae and/or plants are grown. Such nitrogen constituents may pollute the environment and it is therefore desirable to lower the concentration of these constituents in the gas stream or to remove them therefrom. In addition, when supplying the CO₂-containing gas stream to a space in which vegetables, flowers, fruit, algae and/or plants are grown, this may cause an accumulation of nitrogen constituents in this space, which is undesirable.

In an embodiment of the present invention, the CO₂-containing gas stream is subjected to a step of removing smell constituents before it is supplied to a space in which vegetables, flowers, fruit, algae and/or plants are grown. During the biological process in which the CO₂-containing gas stream is obtained, other components are also produced, often smelly constituents. In order to prevent these smelly constituents from adversely affecting the atmosphere of the space in which vegetables, flowers, fruit, algae and/or plants are grown, it is desirable to lower the concentration of smelly constituents in the CO₂-containing gas stream or to remove them therefrom.

In an embodiment of the present invention, the CO₂-containing gas stream is first subjected to a step of removing nitrogen constituents, after which a step of removing smell constituents is carried out.

In an embodiment of the present invention, the CO₂-containing gas stream is supplied to a heat exchanger, in which the CO₂-containing gas stream emerging from the heat exchanger is subjected to a step of removing nitrogen constituents, wherein the CO₂-containing gas stream subjected to the step of removing nitrogen constituents is subjected to a step of removing smell constituents, after which the resultant CO₂-containing gas stream is supplied to a space in which vegetables, flowers, fruit, algae and/or plants are grown. It is also possible to remove certain smell and other polluting constituents during the step of removing nitrogen constituents. According to one such embodiment, the CO₂-containing gas stream is subjected to a number of cleaning steps before it is supplied to a space in which vegetables, flowers, fruit, algae and/or plants are grown.

In an embodiment of the present invention, the CO₂-containing gas stream is not only subjected to a number of cleaning steps, but energy is also extracted therefrom, wherein this energy is supplied to a space in which vegetables, flowers, fruit, algae and/or plants are grown. It is also possible to use the energy extracted from the CO₂-containing gas stream for other objects requiring heat, for example buildings, such as domestic dwellings. According to the present method, the CO₂-containing gas stream which originates from a biological process is thus used for two purposes, namely i) recovering the energy contained in this gas stream, with the recovered energy being supplied to objects requiring heat, for example buildings, such as domestic dwellings, and/or a space in which vegetables, flowers, fruit, algae and/or plants are grown and thus providing the energy demand thereof, and ii) providing the CO₂ required for the growth of vegetables, flowers, fruit, algae and/or plants, which gas stream is supplied to the space in which vegetables, flowers, fruit, algae and/or plants are grown.

In an embodiment of the present invention, nitrogen constituents obtained during the step of removing nitrogen constituents are supplied to the biological process from which the CO₂-containing gas stream originates. Often, additional components, for example minerals, are required in order to ensure that biological processes proceed in an advantageous and smooth way. By now removing the nitrogen constituents from the CO₂-containing gas stream, these recovered constituents can be used in a useful manner, in particular by feeding them to the process from which the CO₂-containing gas stream originates. In this way, nitrogen constituents are being recycled.

In an embodiment of the present invention, the step of removing nitrogen constituents comprises passing the CO₂-containing gas stream through a scrubber, to which scrubber an aqueous acid stream is supplied. The aqueous acid stream will react with the nitrogen constituents which are present in the CO₂-containing gas stream and thus, the CO₂-containing gas stream which leaves the scrubber as a gas stream again, will have been largely stripped of nitrogen constituents. The aqueous stream which leaves the scrubber thus contains the nitrogen constituents.

In an embodiment of the present invention, the step of removing smell constituents comprises passing the CO₂-containing gas stream through an air-treatment unit, in particular a biological air-treatment unit. An example of a biological air-treatment unit is a so-called biobed which contains micro-organisms which convert the smell constituents into non-smelly constituents. The composition of the biobed may be adjusted in order to increase the quality of the CO₂-containing gas stream emanating from the biobed.

One option is to pass the CO₂-containing gas stream through a separation unit, in particular a membrane unit, after the step of removing smell constituents, before it is supplied to a space in which vegetables, flowers, fruit, algae and/or plants are grown. The aim of such a step is to additionally remove undesirable constituents, that is constituents which have not been removed by the previously applied treatment steps.

In an embodiment of the present invention, the biological process, from which the aforementioned CO₂-containing gas stream originates, is a composting process. During composting, a gas stream is produced which, in addition to other constituents, also contains CO₂. In a composting process suitable for the invention, biological residual materials are composted. As a suitable example, residual materials may be mentioned which originate from growing mushrooms, but also other biological residual streams, such as biomass, are suitable therefor, which residual materials may also be used in combination. By way of example of a suitable biological residual material, a residual material which results from growing mushrooms is mentioned, in particular spent mushroom compost and spent matrix. Other suitable biological residual materials which may be treated comprise: spent mushroom compost, biodegradable waste, sludge from water treatment and other operations, roadside grass, green waste, chicken manure, paper sludge, coconut waste, goat manure, cow dung, pig manure, mink manure, rabbit manure, leek waste, wood chips, digestate from fermentation, household waste, agricultural and food remains, ditch sweepings, incontinence material, nappies, sugar beet leaves, sugar beet tips, tomato leaves, cucumber leaves, pepper leaves and potato starch. With such a biological process, a flow of air is supplied, which is then withdrawn from the biological process and should thus be interpreted as a CO₂-containing gas stream.

In an embodiment of the present invention, the resultant residual constituents after composting are used as compost materials for agricultural and horticultural purposes. Such compost materials are rich in organic and mineral constituents and may be used as a natural replacement for artificial fertilizer.

In an embodiment of the present invention, the vegetables are selected from the group of tomatoes, peppers and cucumbers, or a combination thereof. Such vegetables require a high CO₂ content in order to grow well, which content is provided by the measures which have been mentioned above.

In an embodiment of the present invention, the chemical composition of the aforementioned CO₂-containing gas stream originating from a biological process is measured before being supplied to a space in which vegetables, flowers, fruit, algae and/or plants are grown, in particular the chemical composition of one or more of gas streams, selected from the group of: gas stream after the step of removing nitrogen constituents, gas stream after the step of removing smell constituents and gas stream from a membrane unit, is measured. Such a measurement of the chemical composition of the aforementioned gas streams is desirable because the present inventors have found that some chemical constituents have a detrimental effect on the growth process of the vegetables, flowers, fruit, algae and/or plants. Thus, for example, an excessively high ethylene content leads to accelerated ripening, which is undesirable. Also, for example, an excessively high NOx content leads to growth disorders. The NOx content in the growing space is preferably lower than 100 ppb. The ethylene content in the growing space is preferably lower than 10 ppb. The CO₂ content in the growing space is preferably in the range of 500-800 ppm. Because the presence of light is a requirement for the growth process, the consumption of CO₂ will be low during the hours of darkness. Therefore, the dosing of a CO₂-containing gas stream for the growing space will be performed, in particular, during the daytime. It is therefore desirable to have information about the chemical composition of a gas stream, so that it is possible to decide whether to allow or whether not to allow the supply thereof to the space in which vegetables, flowers, fruit, algae and/or plants are grown. Thus, the CO₂ content in the CO₂-containing gas stream may be too low, necessitating admixture of CO₂ from an external source.

The present invention furthermore relates to a device for carrying out the above-described method for the useful recycling of a CO₂-containing gas stream, wherein a CO₂-containing gas stream which originates from a biological process is supplied to a space in which vegetables, flowers, fruit, algae and/or plants are grown. Such a device for the useful recycling of a CO₂-containing gas stream comprises a unit for carrying out a biological process therein, which unit is provided with means for supplying air and means for discharging a CO₂-containing gas stream, the aforementioned means for discharging a CO₂-containing gas stream are connected with a unit for removing nitrogen constituents, the aforementioned unit for removing nitrogen constituents is connected to a unit for removing smell constituents, which unit for removing smell constituents is connected to a space for growing vegetables, flowers, fruit, algae and/or plants.

In an embodiment of the present invention, the device is provided with means for measuring the chemical composition of the aforementioned CO₂-containing gas stream originating from a biological process, in particular means which measure the chemical composition of one or more of gas streams, selected from the group of: gas stream after the step of removing of nitrogen constituents, gas stream after the step of removing smell constituents and gas stream from a membrane unit. Such measurement results are preferably processed electronically in a measurement and control system, which system inter alia determines whether the chemical composition of the respective gas stream satisfies the predetermined requirements. If the chemical composition does not meet the latter, the gas stream may be discharged to the atmosphere or be subjected to a separating step again. It is also possible for admixture with an external source to take place, for example if the CO₂ content of the gas stream is too low for the latter to be supplied to the space in which vegetables, flowers, fruit, algae and/or plants are grown. In the summer, the windows of the space in which vegetables, flowers, fruit, algae and/or plants are grown will often be open, as a result of which CO₂ will be emitted to the outside, resulting in a lowering of the CO₂ content in the growing space. In such a situation, admixing CO₂ may be desirable. Also, the present device is in particular provided with so-called blow-off pipes in order to be able to carry gas streams away to the atmosphere. In addition, such a measurement and control system determines the volume of the gas streams and the time period of supplying the latter to the growing space.

In a specific embodiment, the biological process from which the CO₂-containing gas stream is extracted comprises a number of individual units, for example various composting tunnels. Such composting tunnels are, viewed over time, filled at different moments and therefore the composting processes which take place therein start at different times. This may possibly cause the chemical composition of the discharge gases from each of the composting tunnels to be different from each other. It is therefore desirable to know the chemical composition, in order to be able to decide which gas stream is suitable to be supplied to the growing space. Also, it is possible to first mix the gas streams before supplying them to the growing space.

Specific embodiments of such a device are defined in one or more subclaims.

The present invention will be explained in more detail by means of an example according to the invention, but it should be noted that the application is by no means limited to such a specific example.

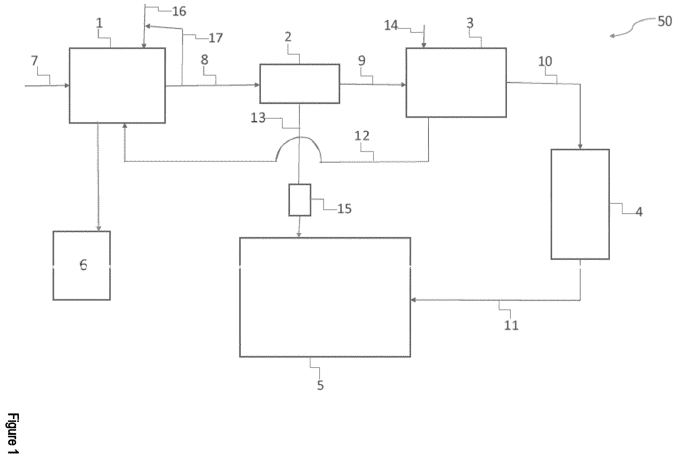

The attached figure shows a block diagram of an embodiment for carrying out of the present method.

### Example

Reference numeral 50 comprises a block diagram of an embodiment for carrying out the present method. As an example of a biological process, a composting process is illustrated here. Material 7 to be composted is transferred to a composting unit 1. It will be clear that composting unit 1 may comprise a number of separate composting units. An example of such a composting unit 1 is known from European patent EP 3 095 771. In such a composting unit 1, the following steps are performed: arranging biological residual material on the surface, supplying air to the pipes and passing air through biological residual material present on the surface. Composting unit 1 may be regarded as a device for treating a biological residual material with air, with the biological residual material being situated on a surface. The means for supplying air comprise a number of pipes which are positioned equidistant from one another under the surface, which pipes comprise at least two outlet openings on the peripheral side thereof, placed at an angle, which outlet openings are positioned equidistant from each other along the length of the pipe. The pipes are positioned under the surface in such a way that the outlet openings supply air to the biological residual material. In this way, an air stream 16 is supplied to composting unit 1 for composting, in which case a portion of the CO₂-containing gas stream 8 originating from composting unit 1 may be returned to composting unit 1, which recirculation stream is denoted by reference numeral 17. The CO₂-containing gas stream 8 originating from composting unit 1 is passed to a heat exchanger 2 where energy is extracted from gas stream 8. In a specific embodiment, the chemical composition of gas stream 8 is measured. The energy which has been extracted in this way is supplied, via a heat-transferring medium 13, to a space 5 in which vegetables, flowers, fruit, algae and/or plants are grown. Heat-transferring medium 13, for example water, may, if desired, be stored in storage vessel 15 before being supplied to space 5. The slightly cooled-down CO₂-containing gas stream 9 originating from heat exchanger 2 is supplied to scrubber 3. A wash liquid 14 is supplied to scrubber 3. The nitrogen constituents present in gas stream 9 are bonded with wash liquid 14 and returned to composting unit 1 as liquid stream 12. The cleaned CO₂-containing gas stream 10 flowing out of scrubber 3 is additionally subjected to a step for removing smell constituents in air-treatment unit 4. The CO₂-containing gas stream 11 from which smell constituents have thus been removed is supplied to a space 5 in which vegetables, flowers, fruit, algae and/or plants are grown. In a specific embodiment, the chemical composition of gas stream 10 is measured. In a specific embodiment, the chemical composition of gas stream 11 is measured. Although not shown in the figure, it is desirable in some embodiments to additionally pass the CO₂-containing gas stream 11 from which smell constituents have been removed through a membrane unit (not shown) before supplying it to space 5, in which vegetables, flowers, fruit, algae and/or plants are grown. Furthermore, a gas stream is discharged to the atmosphere in space 5, optionally using a final cleaning thereof. It also is possible for the illustrated block diagram to include one or more purge streams. It is also possible for certain constituents of the gas stream 8, for example methane- and sulphur-containing constituents, such as H₂S, to be captured before the gas stream 8 is supplied to space 5. After the composting has finished, the residual constituents obtained after composting are used as compost materials 6 for agricultural and horticultural purposes. Measurement data of the chemical composition of gas streams 8, 10 and 11 are processed in a measurement and control system (not shown).

## Claims

1. Method for the useful recycling of a CO₂-containing gas stream, wherein an air stream (16) is supplied to a composting process and a resultant CO₂-containing gas stream (11) is supplied to a space (5) in which vegetables, flowers, fruit, algae and/or plants are grown, comprising the following steps:
supplying the CO₂-containing gas stream (8) originating from said composting process to a heat exchanger (2), in which the energy extracted from the CO₂-containing gas stream is supplied to the space in which vegetables, flowers, fruit, algae and/or plants are grown,
subjecting the CO₂-containing gas stream (9) emerging from the aforementioned heat exchanger to a step of removing nitrogen constituents, wherein the step of removing nitrogen constituents comprises passing the aforementioned CO₂-containing gas stream through a scrubber (3), to which scrubber an aqueous acid stream (14) is supplied,
subjecting the CO₂-containing gas stream (10) emerging from the aforementioned scrubber to a step of removing smell constituents, wherein the step of removing smell constituents comprises passing the aforementioned CO₂-containing gas stream through a biological air-treatment unit (4),
supplying the CO₂-containing gas stream emerging (11) from the aforementioned biological air-treatment unit to the space in which vegetables, flowers, fruit, algae and/or plants are grown.

2. Method according to one or more of the preceding claims, **characterized in that** after the biological air-treatment unit the CO₂-containing gas stream is passed through a separation unit, in particular a membrane unit, before it is supplied to the space in which vegetables, flowers, fruit, algae and/or plants are grown.

3. Method according to one or more of Claims 1-2, **characterized in that** the nitrogen constituents obtained during the aforementioned step of removing nitrogen constituents are supplied to the process from which the aforementioned CO₂-containing gas stream originates.

4. Method according to one or more of the preceding claims, **characterized in that** the in the composting process biomass and/or residual materials originating from growing mushrooms are composted.

5. Method according to one or more of the preceding claims, **characterized in that** the chemical composition of the aforementioned CO₂-containing gas stream originating from the composting process is measured before being supplied to the space in which vegetables, flowers, fruit, algae and/or plants are grown, in particular that the chemical composition of one or more of gas streams, selected from the group of: gas stream after the step of removing nitrogen constituents, gas stream after the step of removing smell constituents and gas stream from a separation unit, in particular a membrane unit, is measured.

6. Device for the useful recycling of a CO₂-containing gas stream, comprising a composting unit for carrying out a composting process therein, which unit is provided with means for supplying air and means for discharging a CO₂-containing gas stream, the aforementioned means for discharging a CO₂-containing gas stream from the aforementioned unit for carrying out the composting process therein are connected to a heat exchanger, following which the CO₂-containing gas stream is supplied to a scrubber for removing nitrogen constituents, to which scrubber an aqueous acid stream is supplied, the scrubber is connected to a biological unit for removing smell constituents, which unit for removing smell constituents is connected to a space for growing vegetables, flowers, fruit, algae and/or plants.

7. Device according to claims 6, **characterized in that** the aforementioned heat exchanger is connected to an object requiring heat, for example buildings, such as domestic dwellings, and/or to the aforementioned space for growing vegetables, flowers, fruit, algae and/or plants.

8. Device according to one or more of Claims 6-7, **characterized in that** the aforementioned unit for removing nitrogen constituents is provided with means for supplying a wash liquid and means for discharging nitrogen constituents containing effluent, which means for discharging nitrogen constituents containing effluent are connected to the aforementioned unit for carrying out a biological process therein.

## Patentansprüche

1. Verfahren zum nützlichen Recycling eines CO₂-haltigen Gasstroms, wobei ein Luftstrom (16) einem Kompostierungsprozess zugeführt wird und ein resultierender CO₂-haltiger Gasstrom (11) einem Raum (5) zugeführt wird, in dem Gemüse, Blumen, Obst, Algen und/oder Pflanzen angebaut wird/werden, umfassend die folgenden Schritte:
Zuführen des aus dem Kompostierungsprozess stammenden CO₂-haltigen Gasstroms (8) zu einem Wärmetauscher (2), in dem die dem CO₂-haltigen Gasstrom entnommene Energie dem Raum zugeführt wird, in dem Gemüse, Blumen, Obst, Algen und/oder Pflanzen angebaut wird/werden,
Unterwerfen des aus dem vorgenannten Wärmetauscher austretenden CO₂-haltigen Gasstroms (9) einem Schritt des Entfernens von Stickstoffbestandteilen, wobei der Schritt des Entfernens von Stickstoffbestandteilen Leiten des vorgenannten CO₂-haltigen Gasstroms durch einen Wäscher (3) umfasst, wobei dem Wäscher ein wässriger Säurestrom (14) zugeführt wird,
Unterwerfen des aus dem vorgenannten Wäscher austretenden CO₂-haltigen Gasstroms (10) einem Schritt des Entfernens von Geruchsbestandteilen, wobei der Schritt des Entfernens von Geruchsbestandteilen Leiten des vorgenannten CO₂-haltigen Gasstroms durch eine biologische Luftbehandlungseinheit (4) umfasst,
Zuführen des aus der vorgenannten biologischen Luftbehandlungseinheit austretenden (11) CO₂-haltigen Gasstroms zu dem Raum, in dem Gemüse, Blumen, Obst, Algen und/oder Pflanzen angebaut wird/werden.

2. Verfahren nach einem oder mehreren der vorhergehenden Ansprüche, **dadurch gekennzeichnet, dass** der CO₂-haltige Gasstrom nach der biologischen Luftbehandlungseinheit durch eine Abscheideeinheit, insbesondere eine Membraneinheit, geleitet wird, bevor er dem Raum zugeführt wird, in dem Gemüse, Blumen, Obst, Algen und/oder Pflanzen angebaut wird/werden.

3. Verfahren nach einem oder mehreren der Ansprüche 1-2, **dadurch gekennzeichnet, dass** die während des vorgenannten Schritts des Entfernens von Stickstoffbestandteilen erhaltenen Stickstoffbestandteile dem Prozess zugeführt werden, aus dem der vorgenannte CO₂-haltige Gasstrom stammt.

4. Verfahren nach einem oder mehreren der vorhergehenden Ansprüche, **dadurch gekennzeichnet, dass** die von einem Anbauen von Pilzen stammende Biomasse und/oder Reststoffe in dem Kompostierungsprozess kompostiert wird/werden.

5. Verfahren nach einem oder mehreren der vorhergehenden Ansprüche, **dadurch gekennzeichnet, dass** die chemische Zusammensetzung des vorgenannten CO₂-haltigen Gasstroms, der aus dem Kompostierungsprozess stammt, gemessen wird, bevor er dem Raum zugeführt wird, in dem Gemüse, Blumen, Obst, Algen und/oder Pflanzen angebaut wird/werden, insbesondere dadurch, dass die chemische Zusammensetzung eines oder mehrerer Gasströme gemessen wird, die aus der folgenden Gruppe ausgewählt sind: Gasstrom nach dem Schritt des Entfernens von Stickstoffbestandteilen, Gasstrom nach dem Schritt des Entfernens von Geruchsbestandteilen und Gasstrom aus einer Abscheideeinheit, insbesondere einer Membraneinheit.

6. Vorrichtung zum nützlichen Recycling eines CO₂-haltigen Gasstroms, umfassend eine Kompostierungseinheit zum Ausführen eines Kompostierungsprozesses darin, wobei die Einheit mit Mitteln zum Zuführen von Luft und Mitteln zum Abführen eines CO₂-haltigen Gasstroms bereitgestellt ist, wobei die vorgenannten Mittel zum Abführen eines CO₂-haltigen Gasstroms aus der vorgenannten Einheit zum Ausführen des Kompostierungsprozesses darin mit einem Wärmetauscher verbunden sind, wonach der CO₂-haltige Gasstrom einem Wäscher zum Entfernen von Stickstoffbestandteilen zugeführt wird, wobei dem Wäscher ein wässriger Säurestrom zugeführt wird, wobei der Wäscher mit einer biologischen Einheit zum Entfernen von Geruchsbestandteilen verbunden ist, wobei die Einheit zum Entfernen von Geruchsbestandteilen mit einem Raum zum Anbauen von Gemüse, Blumen, Obst, Algen und/oder Pflanzen verbunden ist.

7. Vorrichtung nach Anspruch 6, **dadurch gekennzeichnet, dass** der vorgenannte Wärmetauscher mit einem wärmebedürftigen Objekt, zum Beispiel Gebäuden, wie etwa Wohnhäusern, und/oder mit dem vorgenannten Raum zum Anbauen von Gemüse, Blumen, Obst, Algen und/oder Pflanzen verbunden ist.

8. Vorrichtung nach einem oder mehreren der Ansprüche 6-7, **dadurch gekennzeichnet, dass** die vorgenannte Einheit zum Entfernen von Stickstoffbestandteilen mit Mitteln zum Zuführen einer Waschflüssigkeit und Mitteln zum Abführen von Stickstoffbestandteilen, die Abwasser enthalten, bereitgestellt ist, wobei die Mittel zum Abführen von Stickstoffbestandteilen, die Abwasser enthalten, mit der vorgenannten Einheit zum Ausführen eines biologischen Prozesses darin verbunden sind.

## Revendications

1. Procédé pour le recyclage utile d'un flux de gaz contenant du CO₂, dans lequel un flux d'air (16) est fourni à un processus de compostage et un flux de gaz contenant du CO₂ résultant (11) est fourni à un espace (5) dans lequel des légumes, des fleurs, des fruits, des algues et/ou des plantes sont cultivés, comprenant les étapes suivantes :
fourniture du flux de gaz contenant du CO₂ (8) provenant dudit processus de compostage à un échangeur de chaleur (2), dans lequel l'énergie extraite du flux de gaz contenant du CO₂ est fournie à l'espace dans lequel des légumes, des fleurs, des fruits, des algues et/ou des plantes sont cultivés,
soumission du flux de gaz contenant du CO₂ (9) sortant de l'échangeur de chaleur susmentionné à une étape d'élimination de constituants azotés, ladite étape d'élimination de constituants azotés comprenant le passage du flux de gaz contenant du CO₂ susmentionné à travers un laveur (3), auquel laveur un flux acide aqueux (14) est fourni,
soumission du flux de gaz contenant du CO₂ (10) sortant du laveur susmentionné à une étape d'élimination de constituants odorants, ladite étape d'élimination de constituants odorants comprenant le passage du flux de gaz contenant du CO₂ susmentionné à travers une unité biologique de traitement de l'air (4),
fourniture du flux de gaz contenant du CO₂ (11) sortant de l'unité biologique de traitement de l'air susmentionnée à l'espace dans lequel des légumes, des fleurs, des fruits, des algues et/ou des plantes sont cultivés.

2. Procédé selon une ou plusieurs des revendications précédentes, **caractérisé en ce qu'**après l'unité biologique de traitement de l'air, le flux de gaz contenant du CO₂ passe à travers une unité de séparation, en particulier une unité à membrane, avant d'être fourni à l'espace dans lequel des légumes, des fleurs, des fruits, des algues et/ou des plantes sont cultivés.

3. Procédé selon une ou plusieurs des revendications 1 et 2, **caractérisé en ce que** les constituants azotés obtenus au cours de l'étape susmentionnée d'élimination de constituants azotés sont fournis au processus à l'origine du flux de gaz contenant du CO₂ susmentionné.

4. Procédé selon une ou plusieurs des revendications précédentes, **caractérisé en ce que**, dans le processus de compostage, de la biomasse et/ou des matières résiduelles provenant de la culture de champignons sont compostées.

5. Procédé selon une ou plusieurs des revendications précédentes, **caractérisé en ce que** la composition chimique du flux de gaz contenant du CO₂ susmentionné provenant du processus de compostage est mesurée avant qu'il ne soit fourni à l'espace dans lequel des légumes, des fleurs, des fruits, des algues et/ou des plantes sont cultivés, en particulier **en ce que** la composition chimique d'un ou de plusieurs des flux de gaz, sélectionnés dans le groupe de : flux de gaz après l'étape d'élimination de constituants azotés, flux de gaz après l'étape d'élimination de constituants odorants et flux de gaz provenant d'une unité de séparation, en particulier une unité à membrane, est mesurée.

6. Dispositif pour le recyclage utile d'un flux de gaz contenant du CO₂, comprenant une unité de compostage dans laquelle un processus de compostage est réalisé, laquelle unité est équipée de moyens d'alimentation en air et de moyens d'évacuation d'un flux de gaz contenant du CO₂, les moyens susmentionnés d'évacuation d'un flux de gaz contenant du CO₂ de l'unité susmentionnée, dans laquelle un processus de compostage est réalisé, sont reliés à un échangeur de chaleur, après quoi le flux de gaz contenant du CO₂ est fourni à un laveur pour éliminer des constituants azotés, auquel laveur un flux acide aqueux est fourni, le laveur est relié à une unité biologique pour éliminer des constituants odorants, laquelle unité d'élimination de constituants odorants est reliée à un espace destiné à la culture de légumes, de fleurs, de fruits, de algues et/ou de plantes.

7. Dispositif selon la revendication 6, **caractérisé en ce que** l'échangeur de chaleur susmentionné est relié à un objet nécessitant de la chaleur, par exemple des bâtiments, tels que des habitations domestiques, et/ou à l'espace susmentionné destiné à la culture de légumes, de fleurs, de fruits, d'algues et/ou de plantes.

8. Dispositif selon une ou plusieurs des revendications 6 et 7, **caractérisé en ce que** l'unité susmentionnée d'élimination de constituants azotés est équipée de moyens de fourniture de liquide de lavage et de moyens d'évacuation de constituants azotés contenant un effluent, lesquels moyens d'évacuation de constituants azotés contenant un effluent sont reliés à l'unité susmentionnée dans laquelle un processus biologique est réalisé.
